# FASCICULE DE BREVET EUROPEEN

(11) **EP 3 891 431 B1**
(45) Date de publication et mention de la délivrance du brevet: **28.08.2024**
(21) Numéro de dépôt: 19842786.6
(22) Date de dépôt: 25.11.2019
(51) Int. Cl.: F17C 5/02, F17C 5/06

(54) **RÉSERVOIR DE STOCKAGE DE FLUIDE CRYOGÉNIQUE**
LAGERBEHÄLTER FÜR CRYOGENES FLUID
STORAGE VESSEL FOR CRYOGENIC FLUID

(30) Priorité: 06.12.2018 FR 1872428
(43) Date de publication de la demande: 13.10.2021
(73) Titulaire: L'AIR LIQUIDE, SOCIETE ANONYME POUR L'ETUDE ET L'EXPLOITATION DES PROCEDES GEORGES CLAUDE, 75007 Paris (FR)
(72) Inventeur: BEUNEKEN, Olivier, 93150 LE BLANC MESNIL (FR); GENESTE, Didier, 75321 PARIS (FR); POINTEAU, Régis, 75321 PARIS (FR)
(74) Mandataire: Air Liquide
(86) Numéro de dépôt international: PCT/FR2019/052792
(87) Numéro de publication internationale: WO 2020/115394

(56) Documents cités:
- WO-A1-2014/091060
- FR-A1- 2 238 893
- FR-A1- 2 841 963
- FR-A1- 2 941 767
- US-A- 5 771 946
- US-A1- 2017 108 170

## Description

L'invention concerne un réservoir de stockage de fluide cryogénique.

L'invention concerne plus particulièrement un réservoir de stockage de fluide cryogénique et notamment d'un mélange diphasique de liquide et de gaz, comprenant une première enveloppe destinée à contenir le fluide cryogénique, au moins une conduite de soutirage ayant une extrémité amont reliée à la première enveloppe et configurée pour permettre le soutirage de fluide contenu dans la première enveloppe vers l'extérieur du réservoir, un circuit de remplissage du réservoir, le réservoir comprenant un ensemble de capteur(s) mesurant la pression dans la première enveloppe, le réservoir comprenant une conduite de mise en pression de la première enveloppe comprenant une première extrémité reliée à l'extrémité inférieure de la première enveloppe et une seconde extrémité reliée à la partie supérieure de la première enveloppe, la conduite de mise en pression comprenant au moins une vanne de régulation et un réchauffeur, notamment un échangeur de chaleur de vaporisation.

Le maintien d'une pression constante au sein de tels réservoirs est malaisé ou insatisfaisant. L'équipement de mise à l'air (déverseur) en cas de surpression dans le réservoir est séparé du dispositif régulateur/économiseur qui maintient la pression dans le réservoir au-dessus d'un minimum.

Les systèmes connus nécessitent des réglages complexes. De plus, les réglages de ces deux dispositifs peuvent se révéler incohérents/antinomique.

De plus un système complexe est souvent nécessaire pour réaliser une régulation de pression en partie basse du réservoir (dans la partie liquide).

Les documents FR2841963A et WO2014091060 décrivent des réservoirs conformes au préambule de la revendications 1.

Un but de la présente invention est de pallier tout ou partie des inconvénients de l'art antérieur relevés ci-dessus.

A cette fin, le réservoir selon l'invention, par ailleurs conforme à la définition générique qu'en donne le préambule ci-dessus, est conforme à la revendication 1 dans laquelle la vanne de régulation de la conduite de mise en pression est configurée pour maintenir automatiquement la pression dans la première enveloppe à une valeur minimale déterminée de pression en assurant, lorsque la pression dans la première enveloppe est inférieure à ladite valeur minimale, une circulation de liquide prélevé dans la première enveloppe dans le réchauffeur et une réinjection de ce fluide réchauffé dans la première enveloppe et :
- le réservoir comprend un régulateur de mise à l'air relié à l'extrémité supérieure de la première enveloppe
- le réservoir comprend une conduite de soutirage de gaz vaporisé comprenant une première extrémité amont reliée à la partie supérieure de la première enveloppe pour soutirer du fluide à l'état gazeux, ladite conduite de soutirage de gaz vaporisé comprenant un vaporiseur et au moins une vanne de régulation vers une extrémité aval de distribution,
- au moins deux parmi : la vanne de régulation de la conduite de mise en pression, la régulateur de mise à l'air, la vanne de régulation de la conduite de soutirage de gaz vaporisé sont constituées d'une même vanne de régulation automatisée comprenant plusieurs entrées et sorties raccordées respectivement à la première extrémité de conduite de mise en pression de la première enveloppe, à la première extrémité amont de la conduite de soutirage, à la l'extrémité aval de distribution de la conduite de soutirage de gaz vaporisé et à l'atmosphère,

Par ailleurs, des modes de réalisation de l'invention peuvent comporter l'une ou plusieurs des caractéristiques suivantes :
- la vanne de régulation de la conduite de mise en pression est sensible à la pression mesurée par l'ensemble de capteur(s) mesurant la pression dans le première enveloppe, c'est-à-dire que ladite vanne de régulation comprend au moins un élément mobile obturant ou ouvrant un passage pour le fluide dans la conduite de mise en pression, ledit élément mobile étant ouvert ou fermé selon la différence de pression entre d'une part un effort de tarage correspondant à une la valeur minimale de pression et, d'autre part, la pression mesurée par l'ensemble de capteur(s),
- la vanne de régulation de la conduite de mise en pression comprend au moins une vanne pilotée électriquement et un dispositif électronique de commande de la vanne pilotée configuré pour contrôler l'ouverture et la fermeture de la vanne en fonction d'une part de la valeur minimale de pression et, d'autre part, de la pression mesurée par l'ensemble de capteur(s),
- la conduite de soutirage de gaz vaporisé comprenant une seconde extrémité amont reliée à la partie inférieure de la première enveloppe, ladite seconde extrémité amont étant reliée au vaporiseur, pour permettre le soutirage de fluide à l'état liquide, sa vaporisation dans le vaporiseur en vue de fournir du gaz vaporisé au niveau de l'extrémité aval de distribution,
- la vanne de régulation de la conduite de soutirage de gaz vaporisé est configurée pour réduire automatiquement, lors du soutirage via ladite conduite de soutirage, la pression dans la première enveloppe en dessous d'une première valeur maximale en assurant, lorsque la pression dans la première enveloppe est supérieure à ladite première valeur maximale, une circulation de gaz prélevé dans la première enveloppe vers l'extrémité aval de distribution de la conduite de soutirage de gaz,
- le régulateur de mise à l'air est relié à l'extrémité supérieure de la première enveloppe via une portion de la conduite de mise en pression, notamment via la première extrémité de la conduite de mise en pression,
- le régulateur de mise à l'air comprend une vanne pneumatique ou une vanne pilotée électriquement configurée pour contrôler l'ouverture et la fermeture de la vanne vers l'atmosphère en fonction de la pression mesurée par l'ensemble de capteur(s) par rapport à un seuil haut déterminé,
- le régulateur de mise à l'air est configuré pour maintenir automatiquement la pression dans la première enveloppe en dessous d'une seconde valeur maximale en assurant, lorsque la pression dans la première enveloppe est supérieure à ladite seconde valeur maximale, une évacuation du gaz prélevé dans la première enveloppe vers l'atmosphère extérieur,
- au moins deux parmi : la vanne de régulation de la conduite de mise en pression, la régulateur de mise à l'air, la vanne de régulation de la conduite de soutirage de gaz vaporisé, sont intégrés dans un même boîtier ou ensemble de vanne(s) de régulation,
- au moins deux parmi : la vanne de régulation de la conduite de mise en pression, la régulateur de mise à l'air, la vanne de régulation de la conduite de soutirage de gaz vaporisé sont constituées d'une même vanne de régulation automatisée comprenant plusieurs entrées et sorties raccordées respectivement à la première extrémité de conduite de mise en pression de la première enveloppe, à la première extrémité amont de la conduite de soutirage, à la l'extrémité aval de distribution de la conduite de soutirage de gaz vaporisé et à l'atmosphère,
- la vanne de répartition automatisée est une vanne à déplacement linéaire ou une vanne rotative,
- la pression mesurée par l'ensemble de capteur(s) comprend au moins l'un parmi : la pression en partie supérieure de la première l'enveloppe, la pression en partie inférieure de la première l'enveloppe, un différentiel de pression entre la pression en partie supérieure de la première l'enveloppe et la pression en partie inférieure de la première l'enveloppe,
- au moins l'un parmi la vanne de régulation de la conduite de mise en pression, la régulateur de mise à l'air, la vanne de régulation de la conduite de soutirage de gaz vaporisé, est une vanne de régulation sensible à la pression mesurée par l'ensemble de capteur(s),
- le circuit de remplissage comprenant une première conduite de remplissage ayant une extrémité amont destinée à être reliée à une source de fluide et une extrémité aval reliée à la portion inférieure de la première enveloppe, le circuit de remplissage comprenant une seconde conduite de remplissage ayant une extrémité amont destinée à être reliée à la source de fluide et une extrémité aval reliée à la portion supérieure de la première enveloppe, le circuit de remplissage comprenant un ensemble de vanne(s) de répartition configuré pour permettre une répartition du fluide provenant de la source de fluide dans les conduites de remplissage,
- l'ensemble de vanne(s) de répartition du flux de remplissage et l'ensemble de vanne(s) de régulation sont intégrés dans une seule vanne commune,
- la ou les vannes sont pilotées par au moins l'un parmi : l'ensemble des capteurs, le fluide présent dans la ligne de mesure de pression,
- l'ensemble de vanne(s) de répartition est configuré pour réguler automatiquement la pression dans la première enveloppe à une consigne de pression prédéterminée lors d'un remplissage en assurant une répartition automatique du débit de fluide provenant de la source dans les conduites de remplissage en fonction de la consigne de pression et de la pression mesurée par l'ensemble de capteur(s),
- l'ensemble de vanne(s) de répartition est de conception ou structure similaire à celle de l'ensemble de vanne(s) (vanne de régulation de la conduite de mise en pression et/ou vanne de régulation de la conduite de soutirage et/ou régulateur de mise à l'air),
- l'ensemble de vanne(s) de répartition possède des seuils de réglage pour son contrôle identiques ou similaires à ceux de l'ensemble de vanne(s) (vanne de régulation de la conduite de mise en pression et/ou vanne de régulation de la conduite de soutirage et/ou régulateur de mise à l'air),
- l'ensemble de vanne(s) de répartition comprend au moins une vanne actionnée pneumatiquement et/ou via un ensemble d'organe(s) de rappel notamment un ou des ressorts,
- l'ensemble de vanne(s) de répartition est sensible à la pression mesurée par l'ensemble de capteur(s) mesurant la pression dans le première enveloppe, c'est-à-dire que l'ensemble de vanne(s) de répartition présente au moins un élément mobile obturant ou ouvrant un passage pour le fluide entre la source de fluide et le ou les conduites de remplissage, ledit élément mobile étant déplacé dans une pluralité de positions selon la différence de pression entre d'une part un effort de tarage correspondant à la consigne de pression prédéterminée et, d'autre part, la pression mesurée par l'ensemble de capteur(s),
- l'ensemble de vanne(s) de répartition comprend au moins une vanne pilotée électriquement et un dispositif électronique de commande de la vanne pilotée configuré pour contrôler l'ouverture et la fermeture de la vanne en fonction d'une part de la consigne de pression prédéterminée et, d'autre part, de la pression mesurée par l'ensemble de capteur(s),
- l'ensemble de vanne(s) de répartition comprend un boîtier comportant une entrée de fluide destinée à être reliée à la source, deux sorties reliées respectivement aux deux conduites de remplissage et un répartiteur mobile en translation et/ou en rotation dans le boîtier et assurant une mise en relation ou non de l'entrée avec la ou les sorties selon la position du répartiteur mobile,
- l'ensemble de vanne(s) comprend une entrée supplémentaire reliée à l'ensemble de capteur(s) et/ou à une électronique de commande et/ou à un ensemble de commande mécanique et/ou pneumatique tel qu'un ensemble de ressort(s) et/ou membrane(s),
- le boîtier de l'ensemble de vanne(s) de répartition comprend une entrée de fluide reliée à l'extrémité amont de la conduite de mise en pression et une sortie reliée la portion de conduite de mise en pression comprenant le réchauffeur. L'invention peut concerner également tout dispositif alternatif comprenant toute combinaison des caractéristiques ci-dessus ou ci-dessous dans le cadre de la portée des revendications.

D'autres particularités et avantages apparaîtront à la lecture de la description ci-après, faite en référence aux figures dans lesquelles :
[Fig. 1] représente une vue coupe verticale, schématique et partielle, illustrant un exemple de structure et de fonctionnement d'un exemple possible de réalisation de réservoir,
[Fig. 2] représente une vue schématique et partielle, illustrant un premier exemple de structure et de fonctionnement de vanne(s) de contrôle de pression d'un tel réservoir,
[Fig. 3] représente une vue schématique et partielle, illustrant un deuxième exemple de structure et de fonctionnement de vanne(s) de contrôle de pression d'un tel réservoir,
[Fig. 4] représente une vue schématique et partielle, illustrant un troisième exemple de structure et de fonctionnement de vanne(s) de contrôle de pression d'un tel réservoir,
[Fig. 5] représente une vue schématique et partielle, illustrant un quatrième exemple de structure et de fonctionnement de vanne(s) de contrôle de pression d'un tel réservoir,
[Fig. 6] représente une vue schématique et partielle, illustrant un cinquième exemple de structure et de fonctionnement de vanne(s) de contrôle de pression d'un tel réservoir,
[Fig. 7] représente une vue schématique et partielle, illustrant un sixième exemple de structure et de fonctionnement de vanne(s) de contrôle de pression d'un tel réservoir,
[Fig. 8] représente une vue schématique et partielle, illustrant un septième exemple de structure et de fonctionnement de vanne(s) de contrôle de pression d'un tel réservoir,

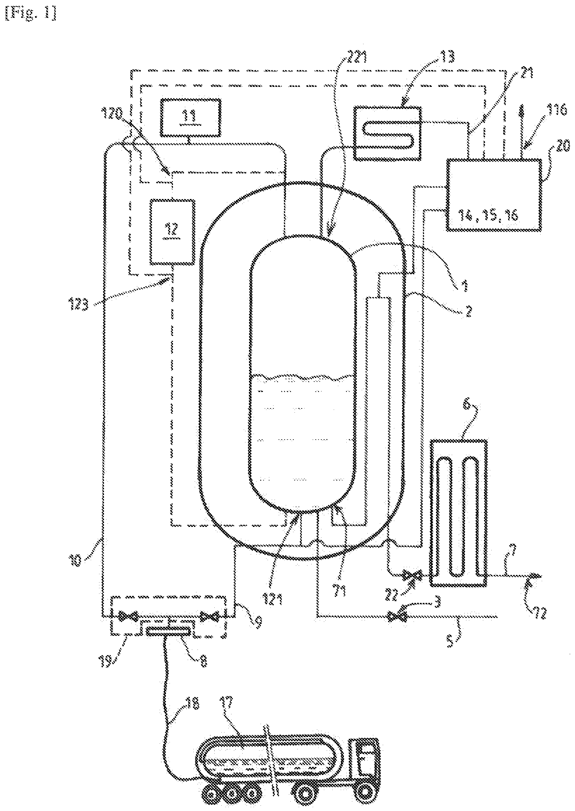

Le réservoir représenté à la [Fig. 1] est un réservoir de stockage de fluide cryogénique et notamment d'un mélange diphasique de liquide et de gaz.

Le réservoir est de préférence un réservoir cryogénique à double enveloppe, comprenant une première enveloppe 1 interne destinée à contenir le fluide cryogénique. La première enveloppe 1 est de préférence entourée d'une seconde enveloppe 2 et le réservoir peut comprendre une isolation thermique dans l'espacement entre les deux enveloppes (notamment un espace sous vide).

Typiquement, la première enveloppe 1 contient une phase liquide en partie inférieure (fluide cryogénique sous forme liquide à très basse température, par exemple de l'azote est à une température de -185°c sous une pression de 2 bar, la valeur de la température est fonction de la pression à l'équilibre) et une phase gazeuse en partie supérieure (« ciel gazeux »).

Classiquement, le réservoir comprend au moins une conduite 5, 7 de soutirage ayant une extrémité amont reliée à la première enveloppe 1 et configurée pour permettre le soutirage de fluide contenu dans la première enveloppe 1 vers l'extérieur du réservoir. Par exemple, et comme illustré, le réservoir peut comporter une première conduite 5 de soutirage dont l'extrémité amont est reliée à la partie inférieure de la première enveloppe 1 pour soutirer du liquide (et de préférence via une vanne 3).

De même, le réservoir peut comporter une autre (ou seconde) conduite 7 de soutirage dont une première extrémité amont 221 est reliée à la partie supérieure de la première enveloppe 1 pour soutirer du fluide à l'état gazeux. Cette conduite 7 de soutirage de gaz vaporisé comprend de préférence une vanne 15, 20 de régulation du flux de fluide vers une extrémité aval 72 de distribution munie d'un vaporiseur 6 (ou réchauffeur) et éventuellement au moins une autre vanne 22.

La conduite 7 de soutirage de gaz vaporisé comprend de préférence une seconde extrémité amont 71 reliée à la partie inférieure de la première enveloppe 1. Cette seconde extrémité amont 71 est reliée au vaporiseur 6, pour permettre le soutirage de fluide à l'état liquide, sa vaporisation dans le vaporiseur 6 en vue de fournir du gaz vaporisé au niveau de l'extrémité aval 72 de distribution. C'est-à-dire que les première 221 et seconde 71 extrémités amont peuvent être raccordées en parallèle à l'extrémité aval 72 et au vaporiseur 6.

Ainsi, avantageusement, le réservoir peut comprendre une ligne ayant une extrémité raccordée à la vanne 15, 20 de régulation et une autre extrémité qui est raccordée entre d'une part, la seconde extrémité 71 (raccordée au bas de la première enveloppe) et, d'autre part, la vanne 22 et le vaporiseur de l'extrémité 72 aval.

Ce vaporiseur 6 extérieur d'utilisation peut être un échangeur thermique servant à transformer le liquide ou gaz cryogénique puisé dans le réservoir intérieur en gaz par échange avec l'atmosphère ambient.

Le réservoir comprenant un ensemble 12 de capteur(s) mesurant la pression dans la première enveloppe 1 dans sa partie supérieure et/ou inférieure.

De plus, le réservoir comprend une conduite 21 de mise en pression de la première enveloppe 1 comprenant une première extrémité 121 reliée à l'extrémité inférieure de la première enveloppe 1 et une seconde extrémité 221 reliée à la partie supérieure de la première enveloppe 1.

La conduite 21 de mise en pression comprenant au moins une vanne 14, 20 de régulation et un réchauffeur 13, notamment un échangeur de chaleur de vaporisation utilisant par exemple l'air comme source chaude.

La vanne 14, 20 de régulation de la conduite 21 de mise en pression est configurée pour maintenir automatiquement la pression dans la première enveloppe 1 à une valeur minimale déterminée Pc en assurant, lorsque la pression dans la première enveloppe 1 est inférieure à ladite valeur minimale, une circulation de liquide prélevé dans la première enveloppe 1 dans le réchauffeur 13 et une réinjection de ce fluide réchauffé dans la première enveloppe 1.

Le réchauffeur 13 permet la vaporisation de liquide prélevé en bas de la première enveloppe 1 pour générer le gaz qui permet, lorsque nécessaire, d'élever la pression de la phase gazeuse par l'intermédiaire du régulateur 14, 20. Ce régulateur 14,20 de mise en pression ouvre si besoin le passage du liquide depuis la phase liquide vers sa phase gazeuse lorsque la pression de la phase gazeuse est inférieure à une pression réglée sur l'appareil notamment la pression de service.

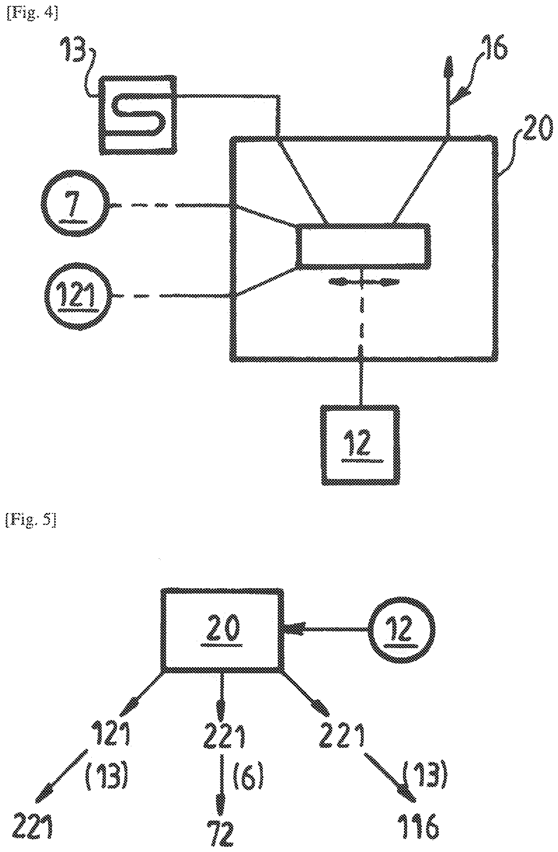

La vanne 14, 20 de régulation de la conduite 21 de mise en pression est de préférence sensible à la pression mesurée par l'ensemble 12 de capteur(s) mesurant la pression dans le première enveloppe 1 (cf. [Fig. 1] à [Fig. 5]).

C'est-à-dire que cette vanne de régulation 14, 20 peut comprendre au moins un élément mobile obturant ou ouvrant un passage pour le fluide dans la conduite 21 de mise en pression. Cet élément mobile est ouvert ou fermé notamment selon la différence de pression entre d'une part un effort de tarage correspondant à une la valeur de pression minimale et, d'autre part, la pression mesurée par l'ensemble 12 de capteur(s).

En variante ou en combinaison, la vanne 14, 20 de régulation de la conduite 21 de mise en pression peut comprendre au moins une vanne pilotée électriquement et un dispositif électronique de commande de la vanne pilotée configuré pour contrôler l'ouverture et la fermeture de la vanne en fonction d'une part de la valeur de la pression minimale et, d'autre part, de la pression mesurée par l'ensemble 12 de capteur(s).

De préférence, la vanne 15, 20 de régulation de la conduite 7 de soutirage de gaz vaporisé est configurée pour réduire automatiquement, lors du soutirage client via ladite conduite 7,la pression dans la première enveloppe 1 en dessous d'une première valeur maximale déterminée en assurant, lorsque la pression dans la première enveloppe 1 est supérieure à ladite première valeur maximale, une circulation de gaz prélevé dans la première enveloppe 1 vers l'extrémité aval 72 de distribution de la conduite 7 de soutirage de gaz. La première valeur maximale déterminée dépend du type de réservoir et de l'application.

Cette vanne 15,20 (ou économiseur) est donc configurée pour ouvrir le passage entre la phase gazeuse de la première enveloppe 1 et l'extrémité aval 72 lorsque la pression dans cette partie supérieure de la première enveloppe 1 est supérieure à une pression prédéterminée et par exemple préréglée (première valeur maximale). Par exemple, cette pression prédéterminée est égale à la pression de service du réservoir Pc + 0,5 bar. Ceci permet de réguler à la baisse, lorsque nécessaire, la pression dans la phase gazeuse de la première enveloppe 1 lors d'une utilisation de gaz issu du réservoir.

C'est-à-dire que, lorsque la pression dans la première enveloppe 1 est supérieure à ladite première valeur maximale, du gaz sous pression est prélevé dans la première enveloppe pour y réduire la pression et ce gaz peut être acheminé vers l'extrémité aval 72 de distribution. C'est-à-dire que ce gaz est utilisé par l'application alimentée par le réservoir.

Classiquement, le réservoir peut comprendre un organe 11 de protection tel qu'une soupape et/ou un disque de rupture permettant une libération de fluide vers l'extérieur en cas de pression excédant une limite dans la première enveloppe 1. Cette limite est typiquement la pression maximale admissible du réservoir (donnée par le constructeur).

Le réservoir comprend en outre de préférence un régulateur 16,20 distinct de mise à l'air relié à l'extrémité supérieure de la première enveloppe.

Comme illustré notamment à la [Fig. 1], le régulateur 16,20 de mise à l'air peut être relié à l'extrémité supérieure de la première enveloppe 1 via une portion de la conduite 21 de mise en pression, notamment via la première extrémité 221 de la conduite de mise en pression.

Le régulateur 16,20 de mise à l'air comprend par exemple une vanne pneumatique ou une vanne pilotée électriquement configurée pour contrôler l'ouverture et la fermeture de la vanne vers l'atmosphère en fonction de la pression mesurée par l'ensemble 12 de capteur(s) par rapport à un seuil haut déterminé.

Le régulateur 16,20 de mise à l'air peut être configuré pour maintenir automatiquement la pression dans la première enveloppe 1 en dessous d'une seconde valeur maximale en assurant, lorsque la pression dans la première enveloppe 1 est supérieure à ladite seconde valeur maximale, une évacuation du gaz prélevé dans la première enveloppe 1 vers l'atmosphère extérieur.

Cette seconde valeur maximale peut être supérieure à la première valeur maximale et peut être comprise par exemple entre cette première valeur maximale et la pression maximale admissible. Cette seconde valeur maximale peut être typiquement égale à la pression d'ouverture de l'organe 11 de protection moins un bar.

Ceci permet de maintenir, lorsque nécessaire, la pression de la phase gazeuse en cas de non utilisation de gaz par le client, sans solliciter le/les organe(s) de sécurité 11. En effet, lorsqu'il n'est pas soutiré de gaz pendant une longue période (pas d'évacuation possible de gaz via l'extrémité 72 par exemple), cela provoque une montée en pression naturelle au sein de la première enveloppe 1.

C'est-à-dire que, lorsque la pression dans le réservoir excède une valeur limite de sécurité (qui dépend du type de réservoir), le régulateur 16 de mise à l'air purge la surpression vers l'extérieur 116 (vers l'atmosphère ou une zone de collecte).

De préférence, au moins deux parmi : la vanne 14,20 de régulation de la conduite 21 de mise en pression, le régulateur 16,20 de mise à l'air, la vanne 15,20 de régulation de la conduite 7 de soutirage de gaz vaporisé, sont intégrés dans un même boîtier 20 ou ensemble de vanne(s).

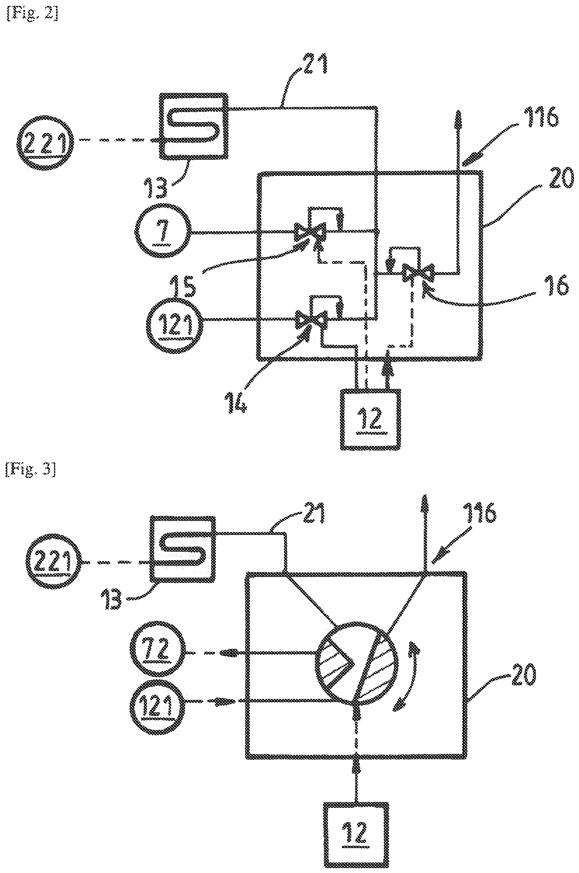

Dans l'exemple de la [Fig. 2], la vanne 14 de régulation de la conduite 21 de mise en pression, le régulateur 16 de mise à l'air et la vanne 15 de régulation de la conduite 7 de soutirage de gaz vaporisé sont des vannes distinctes (pneumatiques et/ou pilotées) qui sont intégrées dans un même boîtier 20 ou ensemble de vannes de régulation.

Le réservoir comprend une circuiterie qui permet
- à la vanne 14 de régulation de la conduite 21 de mise en pression de réguler le flux de fluide entre l'extrémité inférieure de la première enveloppe 1 (référence 121) et l'extrémité supérieure de la première enveloppe (référence 221 via le réchauffeur 13),
- à la vanne 15 de régulation de la conduite 7 de soutirage de gaz de réguler le flux de fluide entre l'extrémité supérieure de la première enveloppe 1 (référence 221) et l'extrémité aval 72 de distribution de gaz (via le vaporiseur 6),
- au régulateur 16 de mise à l'air de réguler le flux de fluide entre l'extrémité supérieure de la première enveloppe 1 (référence 221) et un orifice vers l'extérieur.

A cet effet, les vannes 14 et 15 de régulation de la conduite 21 de mise en pression et de la conduite 7 de soutirage de gaz peuvent être raccordées en parallèle à la seconde extrémité 221 amont de la conduite 21 de mise en pression. De même, ces deux vannes 14 et 15 de régulation peuvent être raccordées en parallèle au régulateur 16 de mise à l'air.

Bien entendu, deux ou trois de ces vannes 14, 15, 16 peuvent être regroupées dans une vanne commune.

Dans l'exemple de la [Fig. 3], ces trois vannes 14, 15, 16 ou régulateurs sont constituées d'une même vanne 20 de régulation rotative automatisée. Cette vanne 20 de régulation peut comprendre plusieurs entrées et/ou sorties raccordées respectivement à la première extrémité 121 de conduite 21 de mise en pression de la première enveloppe 1, à la première extrémité amont 221 de la conduite de soutirage, à l'extrémité aval de distribution de la conduite 7 de soutirage de gaz vaporisé et à l'atmosphère 116. Cette vanne 20 de régulation reçoit la ou les mesures de pression du capteur 12 de pression.

La rotation d'une sphère ou de secteurs de répartition mobile peut assurer ou non les circulations de fluide décrites ci-dessus en réalisant des répartitions de fluide appropriées entre les entrées et les sorties.

Dans l'exemple de la [Fig. 4] la vanne 20 de régulation est une vanne à tiroir (mobile en translation et/ou en rotation) .

Ainsi, comme schématisé à la [Fig. 5], l'ensemble 20 de vanne(s) de régulation reçoit les pressions et/ou les informations de l'ensemble du capteur 12 de pression et en fonction :
- régule un flux de fluide entre les extrémités 121 et 221 via le réchauffeur 13 (mise en pression), et/ou
- régule un flux de fluide entre les extrémités 221 et 72 via le vaporiseur 6 (diminution de la pression via une évacuation vers l'extrémité de distribution), et/ou
- régule un flux de fluide entre les extrémités 221 et 116 (via le réchauffeur) (diminution de la pression via une évacuation vers l'atmosphère).

L'ensemble de capteur(s) 12 peut comprendre une platine de mesure de la pression et éventuellement du niveau de liquide.

Cet ensemble 12 de capteur(s) mesure de préférence (et affiche et/ou transmets le cas échéant) la pression et/ou l'information de pression régnant dans la phase gazeuse (partie supérieure) et/ou la pression et/ou l'information de pression en partie inférieure (en phase liquide) ainsi que le niveau de liquide de la phase liquide (partie inférieure de la première enveloppe). Ce niveau de liquide peut être déterminé par la différence de pression entre le bas et le haut de la première enveloppe de laquelle on déduit la hauteur de la colonne de fluide hydrostatique.

La pression du fluide à l'extrémité inférieure de la première enveloppe est égale à la pression de la phase gazeuse augmentée de la pression hydrostatique générée par la hauteur de liquide de la phase liquide.

A cet effet, l'ensemble de capteur(s) 12 peut comporter une prise de pression 120 de la phase gazeuse (mesure en partie supérieure de la première enveloppe 1) et une prise de pression 123 de la phase liquide (mesure en partie inférieure de la première enveloppe 1). Ces deux prises de pression sont symbolisées par les extrémités des lignes pointillées reliées en partie basse et haute du réservoir et au boîtier 12 de mesure cf. [Fig. 1].

Classiquement, l'ensemble de capteur(s) 12 peut comprendre des capteurs du type mesurant une pression statique ou/et une pression différentielle.

Comme visible à la [Fig. 1], le circuit de remplissage peut comprendre une première conduite 9 de remplissage ayant une extrémité amont destinée à être reliée à une source de fluide (tel qu'un flexible 18 d'un conteneur 17 transporté par un camion) et une extrémité aval reliée à la portion inférieure de la première enveloppe 1.

Le circuit de remplissage comprend de préférence une seconde conduite 10 de remplissage ayant une extrémité amont destinée à être reliée à la source 17 de fluide et une extrémité aval reliée à la portion supérieure de la première enveloppe 1.

Comme illustré, l'extrémité aval de la première conduite 9 de remplissage peut être commune avec la première extrémité 121 de la conduite 21 de mise en pression. C'est-à-dire que la première conduite 9 de remplissage et la conduite de mise en pression peuvent être reliées à la partie inférieure du réservoir via une portion commune.

De préférence, les extrémités amont des première 9 et seconde 10 conduites de remplissage sont configurées pour être raccordées simultanément à la même source 17 de fluide, par exemple au niveau d'une entrée ou bride 8 commune.

Le circuit de remplissage comporte un ensemble 19 de vanne(s) de répartition configuré pour permettre une répartition du fluide provenant de la source 17 de fluide dans une ou les conduites 9, 10 de remplissage.

L'ensemble 19 de vanne(s) de répartition peut être configuré par exemple pour réguler automatiquement la pression dans la première enveloppe 1 à une consigne de pression prédéterminée Pc lors d'un remplissage en assurant une répartition automatique du débit de fluide provenant de la source 17 dans les conduites 9, 10 de remplissage en fonction de la consigne de pression Pc et de la pression mesurée par l'ensemble 12 de capteur(s).

Les pressions mesurées peuvent être utilisées directement comme énergie pour actionner l'ensemble de vannes 19 et 20 ou indirectement (l'information de pression mesurée est utilisée pour générer un effort de commande de l'ensemble de vannes).

Par exemple, la consigne de pression Pc prédéfinie est typiquement la pression de service du réservoir (par exemple, en fonction du besoin de l'utilisateur du gaz et de l'installation en aval du réservoir) . Cette pression peut être la pression à laquelle doit être maintenue le fluide du ciel gazeux (selon l'usage dans le ciel gazeux), ou la pression à laquelle doit être maintenue la partie liquide en bas du réservoir (selon l'usage du fluide dans sa phase liquide).

La pression maximale de service du réservoir est généralement comprise entre un et quarante bar notamment entre 7 et 12 bar selon les types et tailles de réservoirs. Cette pression maximale de service (ou « maximum allowable working pressure » en anglais) est par exemple définie par le constructeur du réservoir
De préférence, le réservoir comprend une borne 8 de remplissage ou bride de connexion du flexible 19 de livraison de la source 17.

L'ensemble 19 de vanne(s) de répartition peut être configuré pour réguler automatiquement la pression dans la première enveloppe 1 à la consigne de pression prédéterminée Pc du réservoir lors du remplissage. Cette régulation est réalisée en remplissant le première enveloppe 1 via uniquement dans la première conduite de remplissage 9 ou uniquement via la seconde conduite de remplissage 10 ou via les deux conduites simultanément.

L'ensemble de vannes 19 régule le débit (section de passage) et la répartition du liquide cryogénique fourni par la source 17 dans les deux conduites 9, 10 pour maintenir ou atteindre cette pression consigne Pc.

L'ensemble de vanne (s) 19 peut comprendre au moins une vanne pneumatique. De préférence, l'ensemble de vanne(s) 19 est un dispositif uniquement mécanique et/ou pneumatique.

Par exemple une pression est maintenue sur une vanne (pression de gaz et/ou ressort ou équivalent) qui transforme la vanne en régulateur de pression.

Par exemple, comme précédemment, l'ensemble 19 de vanne(s) de répartition est sensible à la pression mesurée par l'ensemble 12 de capteur(s) mesurant la pression dans le première enveloppe 1. C'est-à-dire que l'ensemble 19 de vanne(s) de répartition peut comporter au moins un élément mobile obturant ou ouvrant un passage pour le fluide entre la source 17 de fluide et le ou les conduites 9, 10 de remplissage. Cet élément mobile est par exemple déplacé dans une pluralité de positions selon la différence de pression entre d'une part un effort de tarage correspondant à la consigne de pression prédéterminée Pc et, d'autre part, la pression mesurée par l'ensemble 12 de capteur(s).

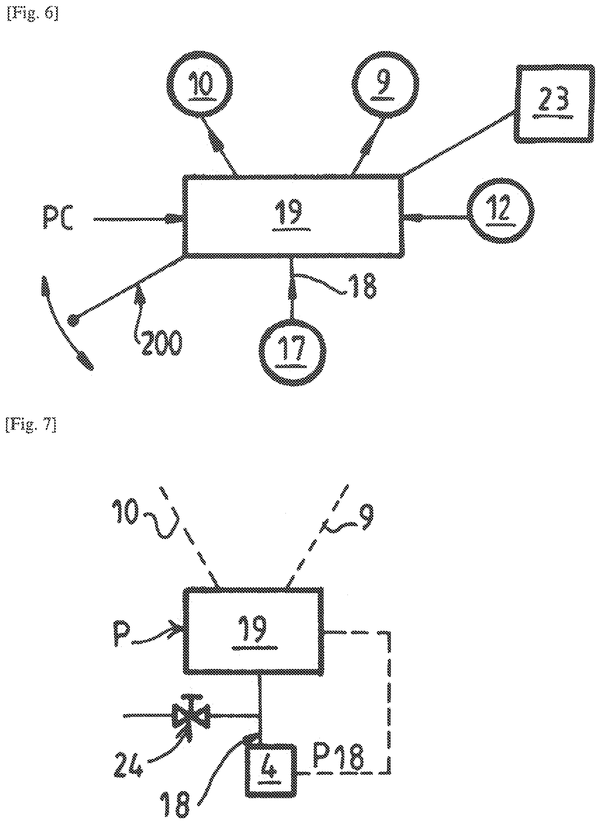

Comme illustré à la [Fig. 6], l'ensemble 19 de vanne(s) de répartition peut être logé dans un boîtier comportant une entrée de fluide destinée à être reliée à la source 17 (extrémité du flexible 18 par exemple), deux sorties reliées respectivement aux deux conduites 9, 10 de remplissage et un répartiteur (l'élément mobile de répartition) déplaçable dans le boîtier pour assurer une mise en relation ou non de l'entrée avec la ou les sorties selon la pression mesurée par l'ensemble 12 de capteur(s) et la consigne de pression Pc.

Comme schématisé à la [Fig. 6], le boîtier de l'ensemble 19 de vanne (s) peut comprendre au moins une entrée reliée à la l'ensemble de capteur(s) 12 fournissant la ou les mesures de pression (pression en partie supérieure, pression en partie inférieure, mesure de pression dans la source 17 notamment au niveau du flexible 18).

Par exemple, comme schématisé à la [Fig. 7], un organe 4 de détection (intégré à ou distinct de l'ensemble 12 de capteurs) mesure la pression P18 dans la source 17, 18 de fluide (par exemple au niveau du flexible) et l'ensemble 19 de vanne(s) de répartition peut être configuré pour interrompre tout passage de fluide provenant de la source 17, 18 vers les conduites 9, 10 de remplissage lorsque la pression mesurée par l'organe 4 de détection est inférieure à un second seuil déterminé (par exemple inférieure à un barg =un bar relatif). Cette mesure de sécurité automatique empêche tout épandage du réservoir notamment en cas de rupture du flexible ou de mauvais branchement.

L'ensemble 19 de vanne(s) peut intégrer également des consignes de pression (consigne de pression Pc et premier seuil de sécurité qui correspond la pression maximale admissible dans le réservoir) cf. [Fig. 6].

Comme précédemment décrit pour la vanne 20, l'élément mobile de la ou des vannes peut être déplaçable en rotation et/ou en translation.

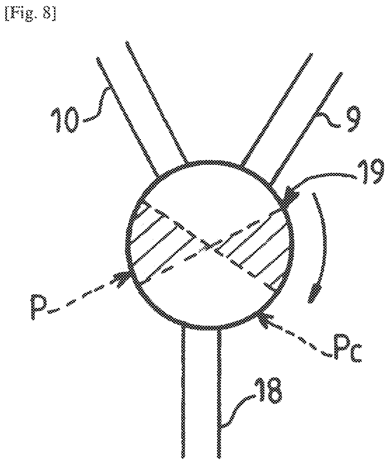

La [Fig. 8] schématise le cas d'un élément mobile en rotation. Par exemple, une sphère ou cylindre rotatif muni de secteurs plein/creusés permet de mitiger ou répartir le flux entre une entrée (reliée au flexible 18 de la source 17) et deux sorties reliées respectivement aux deux conduites 9, 10 de remplissage. La position de l'élément mobile est par exemple le résultat des efforts données par une consigne de pression Pc et la pression P mesurée par l'ensemble 12 de capteurs.

Bien entendu (et comme précédemment pour la vanne ou les vannes 14, 15, 16, 20 ci-dessus), ce mode de réalisation n'est pas limitatif. L'ensemble 19 de vannes pourrait comporter un élément mobile en translation notamment l'ensemble 19 de vannes pourrait comprendre une vanne à tiroir. Cf. par exemple le document FR2845451A1.

Bien entendu, (et comme précédemment pour la ou les vannes 14, 15, 16 et 20), l'ensemble 19 de vanne (s) de répartition pourrait également comprendre ou être constitué d'au moins une vanne pilotée électriquement et un dispositif électronique de commande de la vanne pilotée configuré pour contrôler le flux en fonction d'une part de la consigne de pression prédéterminée Pc et, d'autre part, de la pression P mesurée par l'ensemble 12 de capteur(s).

Ainsi l'ensemble 19, 20 de vanne(s) peut comprendre une ou plusieurs vannes pneumatiques ou commandées, vannes à deux voies, vannes à trois voies ou toute configuration ou combinaison permettant ce contrôle précité.

L'ensemble 19 de vanne(s) de répartition peut être configuré pour interrompre automatiquement tout passage de fluide provenant de la source 17 vers les conduites 9, 10 de remplissage lorsque la pression mesurée par l'ensemble 12 de capteur(s) est supérieure à un premier seuil de sécurité déterminé (par exemple ce premier seuil peut être égal à la pression maximale admissible du réservoir moins un décalage par exemple égal à un bar).

De plus, l'ensemble 19 de vanne(s) de répartition peut être configuré pour réaliser une répartition automatique du débit de fluide provenant de la source 17 majoritairement, et de préférence exclusivement, dans la seconde conduite 10 de remplissage lorsque la pression mesurée par l'ensemble 12 de capteur(s) est inférieure au seuil de sécurité et supérieur à la consigne de pression Pc. C'est-à-dire que, lors du remplissage, si la pression mesurée est comprise entre la pression de consigne Pc et le premier seuil de sécurité, l'ensemble 19 de vanne(s) privilégie le remplissage par la conduite 10.

De plus, l'ensemble 19 de vanne(s) de répartition peut être configuré pour réaliser une répartition automatique du débit de fluide provenant de la source 17 simultanément dans les deux conduites 9, 10 de remplissage lorsque la pression mesurée par l'ensemble 12 de capteur(s) est égale ou sensiblement égale à la consigne de pression Pc (c'est-à-dire la pression de service plus ou moins quelques pourcents). De préférence, le flux de remplissage est réparti à parts égales entre les deux conduites 9, 10 de remplissage mais pourrait être réparti dans des proportions différentes ajustables.

De plus, l'ensemble 19 de vanne(s) de répartition peut être configuré pour réaliser une répartition automatique du débit de fluide provenant de la source 17 majoritairement et de préférence exclusivement dans la première conduite 9 de remplissage lorsque la pression mesurée par l'ensemble 12 de capteur(s) est inférieure la consigne de pression Pc.

Ainsi, selon la pression mesurée dans le réservoir, l'ensemble 19 de vannes peut privilégier un remplissage par le haut (en pluie pour limiter/diminuer la pression) ou par le bas (pour augmenter la pression au sein du réservoir) ou les deux (pour maintenir la pression sensiblement constante).

Ainsi pour assurer un remplissage, l'opérateur/livreur réalise une connexion d'une source 17 de gaz liquéfié et sous pression au réservoir. Par exemple, il relie l'extrémité du flexible 18 à une borne ou bride du réservoir. Il relie ainsi la source 17 au circuit de remplissage. Le livreur peut ouvrir une vanne d'isolation et l'ensemble 19 de vanne(s) va réaliser automatiquement (ou empêcher) le transfert de fluide vers le réservoir selon de consigne de pression Pc prédéterminée et de la pression mesurée par l'ensemble 12 de capteur(s).

Comme illustré à la [Fig. 6], le réservoir peut comprendre un afficheur 23 de l'état et/ou de la configuration et/ou de la position de l'ensemble 19; 20 de vanne(s) et/ou de la pression dans le réservoir.

De plus, le réservoir peut comprendre un organe 200 actionnable manuellement de commande de la position de l'ensemble 19 de vannes pour forcer manuellement la répartition du débit de fluide provenant de la source 17 dans les conduites 9, 10 de remplissage (et ou la fermeture du circuit de remplissage).

De plus, la vanne 14, 20 de régulation de la conduite 21 de mise en pression peut être comprise ou constituée par l'ensemble 19 de vanne(s) de répartition du flux de remplissage. Par exemple l'ensemble de vanne(s) de répartition pourrait être situé sur la conduite 21 de mise en pression.

Ainsi, tout en étant simple et peu coûteuse (en particulier lorsque le ou les ensembles 20, 19 de vanne (s) sont purement mécaniques et/ou pneumatiques), le réservoir possède un mécanisme qui régule automatiquement la pression dans le réservoir en dehors des remplissages (et éventuellement lors des remplissages également).

Le réservoir est ainsi automatiquement protégé contre d'éventuelles surpressions ou dépressions.

## Revendications

1. Réservoir de stockage de fluide cryogénique et notamment d'un mélange diphasique de liquide et de gaz, comprenant une première enveloppe (1) destinée à contenir le fluide cryogénique, au moins une conduite (5, 7) de soutirage ayant une extrémité amont reliée à la première enveloppe (1) et configurée pour permettre le soutirage de fluide contenu dans la première enveloppe (1) vers l'extérieur du réservoir, un circuit (9, 10) de remplissage du réservoir, le réservoir comprenant un ensemble (12) de capteur(s) mesurant la pression dans la première enveloppe (1), le réservoir comprenant une conduite (21) de mise en pression de la première enveloppe (1) comprenant une première extrémité (121) reliée à l'extrémité inférieure de la première enveloppe (1) et une seconde extrémité (221) reliée à la partie supérieure de la première enveloppe (1), la conduite (21) de mise en pression comprenant au moins une vanne (14, 20) de régulation et un réchauffeur (13), notamment un échangeur de chaleur de vaporisation, la vanne (14, 20) de régulation de la conduite (21) de mise en pression étant configurée pour maintenir automatiquement la pression dans la première enveloppe (1) à une valeur minimale déterminée de pression en assurant, lorsque la pression dans la première enveloppe (1) est inférieure à ladite valeur minimale, une circulation de liquide prélevé dans la première enveloppe (1) dans le réchauffeur (13) et une réinjection de ce fluide réchauffé dans la première enveloppe (1), **caractérisé en ce que** le réservoir comprend un régulateur (16) de mise à l'air relié à l'extrémité supérieure de la première enveloppe (1) et **en ce que** le réservoir comprend une conduite (7) de soutirage de gaz vaporisé comprenant une première extrémité amont (221) reliée à la partie supérieure de la première enveloppe (1) pour soutirer du fluide à l'état gazeux, ladite conduite (7) de soutirage de gaz vaporisé comprenant un vaporiseur (6) et au moins une vanne (15, 20) de régulation vers une extrémité aval (72) de distribution et **en ce qu'**au moins deux parmi : la vanne (14, 20) de régulation de la conduite (21) de mise en pression, la régulateur (16, 20) de mise à l'air, la vanne (15, 20) de régulation de la conduite (7) de soutirage de gaz vaporisé, sont constituées d'une même vanne (20) de régulation automatisée comprenant plusieurs entrées et sorties raccordées respectivement à la première extrémité (121) de conduite (21) de mise en pression de la première enveloppe (1), à la première extrémité amont (221) de la conduite de soutirage, à la l'extrémité aval de distribution de la conduite (7) de soutirage de gaz vaporisé et à l'atmosphère (116).

2. Réservoir selon la revendication 1, **caractérisé en ce que** la vanne (14, 20) de régulation de la conduite (21) de mise en pression est sensible à la pression mesurée par l'ensemble (12) de capteur(s) mesurant la pression dans le première enveloppe (1), c'est-à-dire que ladite vanne de régulation (14, 20) comprend au moins un élément mobile obturant ou ouvrant un passage pour le fluide dans la conduite (21) de mise en pression, ledit élément mobile étant ouvert ou fermé selon la différence de pression entre d'une part un effort de tarage correspondant à une la valeur minimale de pression et, d'autre part, la pression mesurée par l'ensemble (12) de capteur(s).

3. Réservoir selon la revendication 1 ou 2, **caractérisé en ce que** la vanne (14, 20) de régulation de la conduite (21) de mise en pression comprend au moins une vanne pilotée électriquement et un dispositif électronique de commande de la vanne pilotée configuré pour contrôler l'ouverture et la fermeture de la vanne en fonction d'une part de la valeur minimale de pression et, d'autre part, de la pression mesurée par l'ensemble (12) de capteur(s).

4. Réservoir selon l'une quelconque des revendications 1 à 3, **caractérisé en ce que** la conduite (7) de soutirage de gaz vaporisé comprenant une seconde extrémité amont (71) reliée à la partie inférieure de la première enveloppe (1), ladite seconde extrémité amont (71) étant reliée au vaporiseur (6), pour permettre le soutirage de fluide à l'état liquide, sa vaporisation dans le vaporiseur (6) en vue de fournir du gaz vaporisé au niveau de l'extrémité aval (72) de distribution.

5. Réservoir selon l'une quelconque des revendications 1 à 4, **caractérisé en ce que** la vanne (15, 20) de régulation de la conduite (7) de soutirage de gaz vaporisé est configurée pour réduire automatiquement, lors du soutirage via ladite conduite (7) de soutirage, la pression dans la première enveloppe (1) en dessous d'une première valeur maximale en assurant, lorsque la pression dans la première enveloppe (1) est supérieure à ladite première valeur maximale, une circulation de gaz prélevé dans la première enveloppe (1) vers l'extrémité aval (72) de distribution de la conduite (7) de soutirage de gaz.

6. Réservoir selon l'une quelconque des revendications 1 à 5, **caractérisé en ce que** le régulateur (16, 20) de mise à l'air est relié à l'extrémité supérieure de la première enveloppe via une portion de la conduite (21) de mise en pression, notamment via la première extrémité (221) de la conduite de mise en pression.

7. Réservoir selon l'une quelconque des revendications 1 à 6, **caractérisé en ce que** le régulateur (16, 20) de mise à l'air comprend une vanne pneumatique ou une vanne pilotée électriquement configurée pour contrôler l'ouverture et la fermeture de la vanne vers l'atmosphère en fonction de la pression mesurée par l'ensemble (12) de capteur(s) par rapport à un seuil haut déterminé.

8. Réservoir selon l'une quelconque des revendications 1à 7, **caractérisé en ce que** le régulateur (16, 20) de mise à l'air est configuré pour maintenir automatiquement la pression dans la première enveloppe (1) en dessous d'une seconde valeur maximale en assurant, lorsque la pression dans la première enveloppe (1) est supérieure à ladite seconde valeur maximale, une évacuation du gaz prélevé dans la première enveloppe (1) vers l'atmosphère extérieur.

9. Réservoir selon l'une quelconque des revendications 1 à 8 **caractérisé en ce que** au moins deux parmi : la vanne (14, 20) de régulation de la conduite (21) de mise en pression, la régulateur (16, 20) de mise à l'air, la vanne (15, 20) de régulation de la conduite (7) de soutirage de gaz vaporisé, sont intégrés dans un même boîtier ou ensemble de vanne(s) de régulation.

10. Réservoir selon l'une quelconque des revendications 1 à 9 **caractérisé en ce que** la vanne (20) de répartition automatisée est une vanne à déplacement linéaire ou une vanne rotative.

11. Réservoir selon l'une quelconque des revendications 1 à 10, **caractérisé en ce que** la pression mesurée par l'ensemble (12) de capteur(s) comprend au moins l'un parmi : la pression en partie supérieure de la première l'enveloppe (1), la pression en partie inférieure de la première l'enveloppe (1), un différentiel de pression entre la pression en partie supérieure de la première l'enveloppe (1) et la pression en partie inférieure de la première l'enveloppe (1).

12. Réservoir selon l'une quelconque des revendications 1 à 11, **caractérisé en ce qu'**au moins l'un parmi la vanne (14, 20) de régulation de la conduite (21) de mise en pression, la régulateur (16, 20) de mise à l'air, la vanne (15, 20) de régulation de la conduite (7) de soutirage de gaz vaporisé, est une vanne (20) de régulation sensible à la pression mesurée par l'ensemble (12) de capteur(s).

13. Réservoir selon l'une quelconque des revendications 1 à 12, **caractérisé en ce que** le circuit de remplissage comprenant une première conduite (9) de remplissage ayant une extrémité amont destinée à être reliée à une source de fluide et une extrémité aval reliée à la portion inférieure de la première enveloppe (1), le circuit de remplissage comprenant une seconde conduite (10) de remplissage ayant une extrémité amont destinée à être reliée à la source de fluide et une extrémité aval reliée à la portion supérieure de la première enveloppe (1), le circuit de remplissage comprenant un ensemble (19) de vanne(s) de répartition configuré pour permettre une répartition du fluide provenant de la source (17) de fluide dans les conduites (9, 10) de remplissage.

14. Réservoir selon la revendication 13, **caractérisé en ce que** l'ensemble (19) de vanne(s) de répartition du flux de remplissage et l'ensemble de vanne(s) de régulation sont intégrés dans une seule vanne commune.

## Patentansprüche

1. Lagerbehälter für kryogenes Fluid und insbesondere für eine zweiphasige Mischung von Flüssigkeit und Gas, welcher eine erste Hülle (1), die dazu bestimmt ist, das kryogene Fluid zu enthalten, mindestens eine Entnahmeleitung (5, 7), die ein mit der ersten Hülle (1) verbundenes stromaufwärtiges Ende aufweist und dafür ausgelegt ist, die Entnahme von in der ersten Hülle (1) enthaltenem Fluid aus dem Behälter zu ermöglichen, und einen Füllkreislauf (9, 10) des Behälters umfasst, wobei der Behälter einen Sensor(en)-Satz (12) umfasst, der den Druck in der ersten Hülle (1) misst, wobei der Behälter eine Leitung (21) zur Druckbeaufschlagung der ersten Hülle (1) umfasst, die ein mit dem unteren Ende der ersten Hülle (1) verbundenes erstes Ende (121) und ein mit dem oberen Teil der ersten Hülle (1) verbundenes zweites Ende (221) umfasst, wobei die Druckbeaufschlagungsleitung (21) mindestens ein Regelventil (14, 20) und einen Erhitzer (13) umfasst, insbesondere einen Verdampfungswärmetauscher, wobei das Regelventil (14, 20) der Druckbeaufschlagungsleitung (21) dafür ausgelegt ist, automatisch den Druck in der ersten Hülle (1) auf einem bestimmten minimalen Druckwert zu halten, indem es, wenn der Druck in der ersten Hülle (1) niedriger als der minimale Wert ist, eine Strömung von aus der ersten Hülle (1) entnommener Flüssigkeit in den Erhitzer (13) und eine Wiedereinspeisung dieses erwärmten Fluids in die erste Hülle (1) sicherstellt, **dadurch gekennzeichnet, dass** der Behälter einen mit dem oberen Ende der ersten Hülle (1) verbundenen Entlüftungsregler (16) umfasst, und dadurch, dass der Behälter eine Leitung (7) zur Entnahme von verdampftem Gas umfasst, die ein erstes stromaufwärtiges Ende (221) umfasst, das mit dem oberen Teil der ersten Hülle (1) verbunden ist, um Fluid im gasförmigen Zustand zu entnehmen, wobei die Leitung (7) zur Entnahme von verdampftem Gas einen Verdampfer (6) und mindestens ein Regelventil (15, 20) in Richtung eines stromabwärtigen Verteilungsendes (72) umfasst, und dadurch, dass mindestens zwei von dem Regelventil (14, 20) der Druckbeaufschlagungsleitung (21), dem Entlüftungsregler (16, 20) und dem Regelventil (15, 20) der Leitung (7) zur Entnahme von verdampftem Gas aus ein und demselben automatisierten Regelventil (20) bestehen, das mehrere Eingänge und Ausgänge umfasst, die an das erste Ende (121) der Druckbeaufschlagungsleitung (21) der ersten Hülle (1), an das erste stromaufwärtige Ende (221) der Entnahmeleitung, an das stromabwärtige Verteilungsende der Leitung (7) zur Entnahme von verdampftem Gas bzw. an die Atmosphäre (116) angeschlossen sind.

2. Behälter nach Anspruch 1, **dadurch gekennzeichnet, dass** das Regelventil (14, 20) der Druckbeaufschlagungsleitung (21) empfindlich gegenüber dem Druck ist, der von dem Sensor(en)-Satz (12) gemessen wird, der den Druck in der ersten Hülle (1) misst, das heißt, dass das Regelventil (14, 20) mindestens ein bewegliches Element umfasst, das einen Durchlass für das Fluid in der Druckbeaufschlagungsleitung (21) verschließt oder öffnet, wobei das bewegliche Element in Abhängigkeit von der Druckdifferenz zwischen einerseits einer Kalibrierkraft, die dem minimalen Druckwert entspricht, und andererseits dem von dem Sensor(en)-Satz (12) gemessenen Druck geöffnet oder geschlossen wird.

3. Behälter nach Anspruch 1 oder 2, **dadurch gekennzeichnet, dass** das Regelventil (14, 20) der Druckbeaufschlagungsleitung (21) mindestens ein elektrisch gesteuertes Ventil und eine elektronische Vorrichtung zur Steuerung des gesteuerten Ventils, die dafür ausgelegt ist, das Öffnen und das Schließen des Ventils in Abhängigkeit von einerseits dem minimalen Druckwert und andererseits dem von dem Sensor(en)-Satz (12) gemessenen Druck zu steuern, umfasst.

4. Behälter nach einem der Ansprüche 1 bis 3, **dadurch gekennzeichnet, dass** die Leitung (7) zur Entnahme von verdampftem Gas ein zweites stromaufwärtiges Ende (71) umfasst, das mit dem unteren Teil der ersten Hülle (1) verbunden ist, wobei das zweite stromaufwärtige Ende (71) mit dem Verdampfer (6) verbunden ist, um die Entnahme von Fluid im flüssigen Zustand und dessen Verdampfung im Verdampfer (6) zu ermöglichen, um am stromabwärtigen Verteilungsende (72) verdampftes Gas zu liefern.

5. Behälter nach einem der Ansprüche 1 bis 4, **dadurch gekennzeichnet, dass** das Regelventil (15, 20) der Leitung (7) zur Entnahme von verdampftem Gas dafür ausgelegt ist, bei der Entnahme über diese Entnahmeleitung (7) automatisch den Druck in der ersten Hülle (1) unter einen ersten Maximalwert zu reduzieren, indem es, wenn der Druck in der ersten Hülle (1) höher als der erste Maximalwert ist, eine Strömung von aus der ersten Hülle (1) entnommenem Gas in Richtung des stromabwärtigen Verteilungsendes (72) der Leitung (7) zur Entnahme von Gas sicherstellt.

6. Behälter nach einem der Ansprüche 1 bis 5, **dadurch gekennzeichnet, dass** der Entlüftungsregler (16, 20) mit dem oberen Ende der ersten Hülle über einen Abschnitt der Druckbeaufschlagungsleitung (21) verbunden ist, insbesondere über das erste Ende (221) der Druckbeaufschlagungsleitung.

7. Behälter nach einem der Ansprüche 1 bis 6, **dadurch gekennzeichnet, dass** der Entlüftungsregler (16, 20) ein pneumatisches Ventil oder ein elektrisch gesteuertes Ventil umfasst, das dafür ausgelegt ist, das Öffnen und das Schließen des Ventils zur Atmosphäre hin in Abhängigkeit von dem Druck, der von dem Sensor(en)-Satz (12) gemessen wird, in Bezug auf einen bestimmten oberen Schwellenwert zu steuern.

8. Behälter nach einem der Ansprüche 1 bis 7, **dadurch gekennzeichnet, dass** der Entlüftungsregler (16, 20) dafür ausgelegt ist, automatisch den Duck in der ersten Hülle (1) unter einem zweiten Maximalwert zu halten, indem er, wenn der Druck in der ersten Hülle (1) höher als der zweite Maximalwert ist, ein Ableiten des aus der ersten Hülle (1) entnommenem Gases in die Außenatmosphäre sicherstellt.

9. Behälter nach einem der Ansprüche 1 bis 8, **dadurch gekennzeichnet, dass** mindestens zwei von dem Regelventil (14, 20) der Druckbeaufschlagungsleitung (21), dem Entlüftungsregler (16, 20) und dem Regelventil (15, 20) der Leitung (7) zur Entnahme von verdampftem Gas in dasselbe Gehäuse oder dieselbe Anordnung von Regelventil(en) integriert sind.

10. Behälter nach einem der Ansprüche 1 bis 9, **dadurch gekennzeichnet, dass** das automatisierte Verteilungsventil (20) ein lineares Ventil oder ein Drehventil ist.

11. Behälter nach einem der Ansprüche 1 bis 10, **dadurch gekennzeichnet, dass** der von dem Sensor(en)-Satz (12) gemessene Druck mindestens eines umfasst von: dem Druck im oberen Teil der ersten Hülle (1), dem Druck im unteren Teil der ersten Hülle (1), einer Druckdifferenz zwischen dem Druck im oberen Teil der ersten Hülle (1) und dem Druck im unteren Teil der ersten Hülle (1).

12. Behälter nach einem der Ansprüche 1 bis 11, **dadurch gekennzeichnet, dass** mindestens eines von dem Regelventil (14, 20) der Druckbeaufschlagungsleitung (21), dem Entlüftungsregler (16, 20) und dem Regelventil (15, 20) der Leitung (7) zur Entnahme von verdampftem Gas ein Regelventil (20) ist, das empfindlich gegenüber dem Druck ist, der von dem Sensor(en)-Satz (12) gemessen wird.

13. Behälter nach einem der Ansprüche 1 bis 12, **dadurch gekennzeichnet, dass** der Füllkreislauf eine erste Füllleitung (9) umfasst, die ein stromaufwärtiges Ende, das dazu bestimmt ist, mit einer Fluidquelle verbunden zu werden, und ein stromabwärtiges Ende, das mit dem unteren Abschnitt der ersten Hülle (1) verbunden ist, aufweist, der Füllkreislauf eine zweite Füllleitung (10) umfasst, die ein stromaufwärtiges Ende, das dazu bestimmt ist, mit der Fluidquelle verbunden zu werden, und ein stromabwärtiges Ende, das mit dem oberen Abschnitt der ersten Hülle (1) verbunden ist, aufweist, und der Füllkreislauf eine Anordnung (19) von Verteilungsventil(en) umfasst, die dafür ausgelegt ist, eine Verteilung des von der Fluidquelle (17) kommenden Fluids in den Füllleitungen (9, 10) zu ermöglichen.

14. Behälter nach Anspruch 13, **dadurch gekennzeichnet, dass** die Anordnung (19) von Verteilungsventil(en) des Füllstroms und die Anordnung von Regelventil(en) in ein einziges gemeinsames Ventil integriert sind.

## Claims

1. Tank for storing cryogenic fluid, and in particular a two-phase mixture of liquid and of gas, comprising a first casing (1) intended to contain the cryogenic fluid, at least one drawing-off pipe (5, 7) having an upstream end connected to the first casing (1) and being configured to allow fluid contained in the first casing (1) to be drawn-off toward the outside of the tank, a circuit (9, 10) for filling the tank, the tank comprising a set (12) of one or more sensor (s) measuring the pressure in the first casing (1), the tank comprising a pipe (21) for pressurizing the first casing (1) and comprising a first end (121) connected to the lower end of the first casing (1) and a second end (221) connected to the upper part of the first casing (1), the pressurization pipe (21) comprising at least one regulating valve (14, 20) and a heater (13), in particular a vaporization heat exchanger, the regulating valve (14, 20) of the pressurization pipe (21) being configured to automatically maintain the pressure in the first casing (1) at a minimum determined pressure value by ensuring, when the pressure in the first casing (1) is lower than said minimum value, that the liquid taken from the first casing (1) is circulated in the heater (13) and that this heated fluid is re-introduced into the first casing (1), **characterized in that** the tank comprises an air venting regulator (16) connected to the upper end of the first casing (1), and **in that** the tank comprises a vaporized gas drawing-off pipe (7) comprising a first upstream end (221) connected to the upper part of the first casing (1) for drawing-off fluid in the gaseous state, said vaporized gas drawing-off pipe (7) comprising a vaporizer (6) and at least one regulating valve (15, 20) toward a downstream distribution end (72), and **in that** at least two from among: the regulating valve (14, 20) of the pressurization pipe (21), the air venting regulator (16, 20), the regulating valve (15, 20) of the vaporized gas drawing-off pipe (7), are made up of the same automated regulating valve (20) comprising a plurality of inlets and outlets respectively connected to the first end (121) of the pressurization pipe (21) for pressurizing the first casing (1), to the first upstream end (221) of the drawing-off pipe, to the downstream distribution end of the vaporized gas drawing-off pipe (7), and to the atmosphere (116).

2. Tank according to Claim 1, **characterized in that** the regulating valve (14, 20) of the pressurization pipe (21) is sensitive to the pressure measured by the set (12) of one or more sensor(s) measuring the pressure in the first casing (1), i.e. said regulating valve (14, 20) comprises at least one movable element closing or opening a passage for the fluid in the pressurization pipe (21), said movable element being opened or closed according to the pressure difference between, on the one hand, a setting force corresponding to a minimum pressure value and, on the other hand, the pressure measured by the set (12) of one or more sensor(s).

3. Tank according to Claim 1 or 2, **characterized in that** the regulating valve (14, 20) of the pressurization pipe (21) comprises at least one electrically controlled valve and an electronic device for controlling the controlled valve and configured to control the opening and the closing of the valve as a function of, on the one hand, the minimum pressure value and, on the other hand, the pressure measured by the set (12) of one or more sensor(s).

4. Tank according to any one of Claims 1 to 3, **characterized in that** the vaporized gas drawing-off pipe (7) comprises a second upstream end (71) connected to the lower part of the first casing (1), said second upstream end (71) being connected to the vaporizer (6), to allow fluid to be drawn-off in the liquid state and to be vaporized in the vaporizer (6) with a view to supplying vaporized gas at the downstream distribution end (72).

5. Tank according to any one of Claims 1 to 4, **characterized in that** the regulating valve (15, 20) of the vaporized gas drawing-off pipe (7) is configured to automatically reduce, during drawing-off via said drawing-off pipe (7), the pressure in the first casing (1) to below a first maximum value by ensuring, when the pressure in the first casing (1) is higher than said first maximum value, that gas taken from the first casing (1) is circulated toward the downstream distribution end (72) of the gas drawing-off pipe (7).

6. Tank according to any one of Claims 1 to 5, **characterized in that** the air venting regulator (16, 20) is connected to the upper end of the first casing via a portion of the pressurization pipe (21), in particular via the first end (221) of the pressurization pipe.

7. Tank according to any one of Claims 1 to 6, **characterized in that** the air venting regulator (16, 20) comprises a pneumatic valve or an electrically controlled valve configured to control the opening and the closing of the valve to the atmosphere as a function of the pressure measured by the set (12) of one or more sensor (s) in relation to a determined high threshold.

8. Tank according to any one of Claims 1 to 7, **characterized in that** the air venting regulator (16, 20) is configured to automatically maintain the pressure in the first casing (1) below a second maximum value by ensuring, when the pressure in the first casing (1) is higher than said second maximum value, that the gas taken from the first casing (1) is discharged toward the outside atmosphere.

9. Tank according to any one of Claims 1 to 8, **characterized in that** at least two from among: the regulating valve (14, 20) of the pressurization pipe (21), the air venting regulator (16, 20), the regulating valve (15, 20) of the vaporized gas drawing-off pipe (7), are integrated in the same housing or set of one or more regulating valve(s).

10. Tank according to any one of Claims 1 to 9, **characterized in that** the automated distribution valve (20) is a linear-movement valve or a rotary valve.

11. Tank according to any one of Claims 1 to 10, **characterized in that** the pressure measured by the set (12) of one or more sensor(s) comprises at least one from among: the pressure in the upper part of the first casing (1), the pressure in the lower part of the first casing (1), a pressure difference between the pressure in the upper part of the first casing (1) and the pressure in the lower part of the first casing (1).

12. Tank according to any one of Claims 1 to 11, **characterized in that** at least one from among the regulating valve (14, 20) of the pressurization pipe (21), the air venting regulator (16, 20), the regulating valve (15, 20) of the vaporized gas drawing-off pipe (7), is a regulating valve (20) sensitive to the pressure measured by the set (12) of one or more sensor(s).

13. Tank according to any one of Claims 1 to 12, **characterized in that**, with the filling circuit comprising a first filling pipe (9) having an upstream end intended to be connected to a fluid source and a downstream end connected to the lower portion of the first casing (1), the filling circuit comprises a second filling pipe (10) having an upstream end intended to be connected to the fluid source and a downstream end connected to the upper portion of the first casing (1), the filling circuit comprising a set (19) of one or more distribution valve(s) configured to allow distribution of the fluid originating from the fluid source (17) in the filling pipes (9, 10).

14. Tank according to Claim 13, **characterized in that** the set (19) of one or more valve(s) for distributing the filling flow and the set of one or more regulating valve(s) are integrated in a single common valve.
